(19) 

**Europäisches Patentamt**
**European Patent Office**
**Office européen des brevets**

(11) **EP 4 613 805 A1**

(12) **EUROPEAN PATENT APPLICATION**
published in accordance with Art. 153(4) EPC

(43) Date of publication:
**10.09.2025 Bulletin 2025/37**

(21) Application number: **23897726.8**

(22) Date of filing: **27.11.2023**

(51) International Patent Classification (IPC):
*C08L 11/02* (2006.01)     *C08F 36/18* (2006.01)
*C08L 93/04* (2006.01)     *C09J 111/02* (2006.01)

(52) Cooperative Patent Classification (CPC):
**C08F 36/18; C08L 11/02; C08L 93/04; C09J 111/02**

(86) International application number:
**PCT/JP2023/042360**

(87) International publication number:
**WO 2024/117078 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.11.2022  JP 2022189171
06.01.2023  JP 2023001290
06.11.2023  JP 2023189347

(71) Applicant: **Denka Company Limited
Tokyo 103-8338 (JP)**

(72) Inventors:
• **NAKAMURA, Takumi
Tokyo 103-8338 (JP)**
• **SOTOKAWA, Shota
Tokyo 103-8338 (JP)**

(74) Representative: **Gulde & Partner
Patent- und Rechtsanwaltskanzlei mbB
Berliner Freiheit 2
10785 Berlin (DE)**

(54) **CHLOROPRENE-BASED POLYMER LATEX COMPOSITION AND ADHESIVE COMPOSITION**

(57)     Provided are a chloroprene-based polymer latex composition capable of providing an adhesive composition having excellent sprayability, and an adhesive composition comprising the chloroprene-based polymer latex composition.

According to the present invention, there is provided a chloroprene-based polymer latex composition comprising a chloroprene-based polymer, wherein when the chloroprene-based polymer latex composition is adjusted to a solid content concentration of 55% by mass to obtain a test chloroprene-based polymer latex composition, an agglomerate generation rate of the test chloroprene-based polymer latex composition in a mechanical stability test under conditions of a load of 10 kg and a rotation speed of 1000 rpm is 0.01% to 1.00%; and the viscosity at 23°C and 6 rpm of the test chloroprene-based polymer latex composition measured with a B-type viscometer is 22 to 100 mPa·s.

**EP 4 613 805 A1**

## Description

TECHNICAL FIELD

The present invention relates to a chloroprene-based polymer latex composition and an adhesive composition.

BACKGROUND ART

Adhesives comprising a chloroprene-based polymer are used in solvent-based contact adhesives, graft adhesives, and the like because high adhesive strength can be obtained with low pressure application to various adherends. However, regulations regarding solvent-based adhesives are becoming stricter year by year due to their flammability and toxicity. Therefore, water-based adhesives using chloroprene polymer latexes have been developed.

For example, Patent Literature 1 discloses a chloroprene-based polymer latex characterized by comprising an emulsifier which is an alkali metal salt of a carboxylic acid, and 0.1 to 0.5 parts by weight of a polyoxyalkylene derivative represented by a specific formula within 100 parts by weight of the chloroprene-based polymer latex, as well as an adhesive composition comprising the chloroprene-based polymer latex.

CITATION LIST

PATENT LITERATURE

Patent Literature 1: JP 2016-160295 A

SUMMARY OF INVENTION

TECHNICAL PROBLEM

However, conventional water-based adhesives comprising a chloroprene-based polymer latex composition sometimes have insufficient sprayability, and it has been difficult to obtain a water-based adhesive having excellent sprayability while possessing excellent initial adhesive strength. The present invention has been made in view of such circumstances, and an object thereof is to provide a chloroprene-based polymer latex composition capable of yielding an adhesive composition having excellent initial adhesive strength and sprayability, and an adhesive composition comprising the same.

SOLUTION TO PROBLEM

According to the present invention, there is provided a chloroprene-based polymer latex composition comprising a chloroprene-based polymer, wherein when the chloroprene-based polymer latex composition is adjusted to a solid content concentration of 55% by mass to obtain a test chloroprene-based polymer latex composition, an agglomerate generation rate of the test chloroprene-based polymer latex composition in a mechanical stability test under conditions of a load of 10 kg and a rotation speed of 1000 rpm is 0.01% to 1.00%, and a viscosity of the test chloroprene-based polymer latex composition measured with a B-type viscometer at 23°C and 6 rpm is 22 to 100 mPa·s.

The present inventors conducted diligent investigations and found that by adjusting the agglomerate generation rate in a mechanical stability test and the viscosity to be within specific numerical ranges for a test chloroprene-based polymer latex composition obtained by adjusting a chloroprene-based polymer latex composition to a specific solid content concentration, a chloroprene-based polymer latex composition capable of yielding an adhesive composition having excellent initial adhesive strength and sprayability can be obtained, thereby completing the present invention.

Hereinafter, various embodiments of the present invention are illustrated. The embodiments shown below can be combined with each other.

[1] A chloroprene-based polymer latex composition comprising a chloroprene-based polymer, wherein: when the chloroprene-based polymer latex composition is adjusted to a solid content concentration of 55% by mass to obtain a test chloroprene-based polymer latex composition, an agglomerate generation rate of the test chloroprene-based polymer latex composition in a mechanical stability test under conditions of a load of 10 kg and a rotation speed of 1000 rpm is 0.01% to 1.00%; and a viscosity of the test chloroprene-based polymer latex composition measured with a B-type viscometer at 23°C and 6 rpm is 22 to 100 mPa·s.

[2] The chloroprene-based polymer latex composition of [1], wherein the chloroprene-based polymer latex composition comprises 0.5 to 3.5 parts by mass of a conjugated resin acid with respect to 100 parts by mass of the chloroprene-based polymer.

[3] The chloroprene-based polymer latex composition of [1] or [2], wherein the chloroprene-based polymer has a toluene insoluble content of 30% by mass or less.

[4] The chloroprene-based polymer latex composition of any one of [1] to [3], wherein a content of a nonionic surfactant is 0.40 parts by mass or less with respect to 100 parts by mass of the chloroprene-based polymer.

[5] The chloroprene-based polymer latex composition of any one of [1] to [4], wherein: when the chloroprene-based polymer latex composition, an acrylic latex comprising an acrylic polymer, and a pH adjuster are mixed to prepare a test adhesive composition comprising 25 parts by mass of the acrylic polymer and 11 parts by mass of the pH adjuster with respect to 100 parts by mass of the chloroprene-based polymer, an agglomerate generation rate of the test adhesive composition in a mechanical stability test under conditions of a load of 1.0 kg and a rotation speed of 1000 rpm is 1.0% to 10.0%; and a viscosity of the test adhesive composition measured with a B-type viscometer at 23°C and 6 rpm is 100 to 5000 mPa·s.

[6] An adhesive composition comprising the chloroprene-based polymer latex composition of any one of [1] to [5].

[7] The adhesive composition of [6], wherein an agglomerate generation rate in a mechanical stability test under conditions of a load of 1.0 kg and a rotation speed of 1000 rpm is 1.0% to 10.0%, and a viscosity measured with a B-type viscometer at 23°C and 6 rpm is 100 to 5000 mPa·s.

[8] The adhesive composition of [6] or [7], wherein the adhesive composition is for a polyurethane foam.

EFFECTS OF INVENTION

According to the chloroprene-based polymer latex composition of the present invention, an adhesive composition having excellent sprayability can be obtained. Specifically, the adhesive composition comprising the chloroprene-based polymer latex composition according to the present invention has appropriate fluidity, thus causing less clogging, being easy to spray apply, causing fewer problems such as soaking into or dripping from the adherend, and the adhesive composition exhibits good applicability to the adherend. The adhesive composition comprising the chloroprene-based polymer latex composition according to the present invention can be suitably used, for example, as a spray-type adhesive used for bonding polyolefin resins or foams, particularly polyurethane foam.

DESCRIPTION OF EMBODIMENTS

Hereinafter, the present invention will be described in detail by illustrating embodiments of the present invention. The present invention is not limited in any way by these descriptions. Each feature of the embodiments of the present invention shown below can be combined with each other. Furthermore, an invention can be established independently for each feature.

1. Chloroprene-based Polymer Latex Composition

The chloroprene-based polymer latex composition according to the present invention comprises a chloroprene-based polymer, and when the chloroprene-based polymer latex composition is adjusted to a solid content concentration of 55% by mass to obtain a test chloroprene-based polymer latex composition, an agglomerate generation rate of the test chloroprene-based polymer latex composition in a mechanical stability test under conditions of a load of 10 kg and a rotation speed of 1000 rpm is 0.01% to 1.00%, and a viscosity of the test chloroprene-based polymer latex composition measured with a B-type viscometer at 23°C and 6 rpm is 22 to 100 mPa·s.

1.1 Chloroprene-based Polymer and Chloroprene-based Polymer Latex

In the present invention, a chloroprene-based polymer latex means a latex comprising a chloroprene-based polymer. Further, the chloroprene-based polymer means a polymer comprising a monomer unit derived from 2-chloro-1,3-butadiene (hereinafter also referred to as a chloroprene monomer), and includes a homopolymer of the chloroprene monomer, and a copolymer comprising a monomer unit derived from the chloroprene monomer and another monomer copolymerizable with the chloroprene monomer. Examples of the other monomer include 1-chloro-1,3-butadiene, 2,3-dichloro-1,3-butadiene, butadiene, isoprene, styrene, acrylonitrile, acrylic acid and its esters, methacrylic acid and its esters, and the like.

The chloroprene-based polymer latex composition according to one embodiment of the present invention preferably comprises 60 to 100% by mass of the chloroprene monomer unit, when the chloroprene-based polymer contained in the chloroprene-based polymer latex composition is taken as 100% by mass. The content rate of the chloroprene monomer unit is, for example, 60, 65, 70, 75, 80, 85, 90, 95, 99, or 100% by mass, and may be within a range between any two of the numerical values exemplified here.

The chloroprene-based polymer latex composition according to one embodiment of the present invention may comprise one type of chloroprene-based polymer, or may comprise two or more types of chloroprene-based polymers. The chloroprene-based polymer latex composition according to one embodiment of the present invention preferably comprises a homopolymer of the chloroprene monomer. The chloroprene-based polymer latex composition according to one embodiment of the present invention preferably comprises 60 to 100% by mass, in terms of solid content, of the homopolymer of the chloroprene monomer, with respect to 100% by mass of the solid content of the chloroprene-based polymer latex contained in the chloroprene-based polymer latex composition. The content rate of the homopolymer of the chloroprene monomer is, for example, 60, 65, 70, 75, 80, 85, 90, 95, or 100% by mass, and may be within a range between any two of the numerical values exemplified here. By comprising the homopolymer of the chloroprene monomer, the chloroprene-based polymer latex composition according to one embodiment of the present invention can further improve the contact properties, heat-resistant adhesion, and initial adhesive strength of an adhesive composition comprising the chloroprene-based polymer latex composition.

<Toluene Insoluble Content>

The chloroprene-based polymer according to one embodiment of the present invention preferably has a toluene insoluble content of 30% by mass or less, and more preferably 10% by mass or less. The toluene insoluble content is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30% by mass, and may be within a range between any two of the numerical values exemplified here.

In the present invention, the toluene insoluble content refers to the content rate of the gel fraction, among the chloroprene-based polymer, that is insoluble in a toluene solvent. Further, sol refers to the component soluble in the toluene solvent. It is presumed that when the chloroprene-based polymer according to one embodiment of the present invention has a toluene insoluble content (gel fraction) within the above numerical range, it appropriately contains sol with excellent molecular mobility, fusion of the molecular chains of the chloroprene-based polymer occurs rapidly at the adhesive interface, adhesive strength develops instantaneously, and thus more excellent initial adhesive strength can be exhibited.

The toluene insoluble content can be determined by the following formula, where A g is the mass of the chloroprene-based polymer obtained by freeze-drying the chloroprene-based polymer latex, and B g is the mass of the gel fraction (insoluble fraction) separated from a mixture obtained by dissolving the freeze-dried latex in toluene. Specifically, it can be determined by the method described in the Examples.

$$\text{Toluene insoluble content (gel fraction)} = B/A \times 100 \ (\%)$$

The toluene insoluble content can be controlled by adjusting the polymerization conditions during the production of the chloroprene-based polymer latex, for example, manufacturing conditions such as the type and amount of a polymerization initiator and a chain transfer agent, as well as polymerization temperature, polymerization time, polymerization rate, and the like.

When the chloroprene-based polymer latex composition comprises two or more types of chloroprene-based polymers, it is preferable that the toluene insoluble content of a mixture obtained by mixing the two or more types of chloroprene-based polymers is within the above numerical range.

<Average Particle Size>

The chloroprene-based polymer latex according to one embodiment of the present invention preferably has an average particle size of 160 nm or less. The average particle size is, for example, 90, 95, 100, 105, 110, 115, 120, 125, 130, 135, 140, 145, 150, 155, or 160 nm, and may be within a range between any two of the numerical values exemplified here.

The average particle size of the chloroprene-based polymer latex can be a value determined by the cumulant method using an autocorrelation function determined by the photon correlation method in the dynamic light scattering method. Specifically, it can be determined by the method described in the Examples. The average particle size of the chloroprene-based polymer latex can be controlled by adjusting the polymerization conditions during the production of the chloroprene-based polymer latex, for example, manufacturing conditions such as the type and amount of an emulsifier and the like, and polymerization temperature, polymerization time, polymerization rate, and the like.

1.2 Conjugated resin acid

The chloroprene-based polymer latex composition according to one embodiment of the present invention can comprise 3.5 parts by mass or less of a conjugated resin acid with respect to 100 parts by mass of the chloroprene-based polymer, preferably comprises 0.5 to 3.5 parts by mass, and preferably comprises 1.4 to 3.0 parts by mass. The content of the conjugated resin acid with respect to 100 parts by mass of the chloroprene-based polymer is, for example, 0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, or 3.5 parts by mass, and may be within a range between any two of the numerical values exemplified here. The chloroprene-based polymer latex composition according to one embodiment of the present invention may not contain a conjugated resin acid.

The chloroprene-based polymer latex composition according to one embodiment of the present invention may comprise 0.5 to 6.0 parts by mass of a non-conjugated resin acid with respect to 100 parts by mass of the chloroprene-based polymer. The content of the non-conjugated resin acid with respect to 100 parts by mass of the chloroprene-based polymer is, for example, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, or 6.0 parts by mass, and may be within a range between any two of the numerical values exemplified here.

In the chloroprene-based polymer latex composition according to one embodiment of the present invention, the content rate of the conjugated resin acid can be 5% by mass or more, when the total content of the conjugated resin acid and the non-conjugated resin acid in the chloroprene-based polymer latex composition is taken as 100% by mass. The content rate of the conjugated resin acid is, for example, 5, 10, 15, 20, 25, 30, 35, 40, 45, 50, 55, 60, 65, 70, 75, 80, 90, or 100% by mass, and may be within a range between any two of the numerical values exemplified here.

A conjugated resin acid means a resin acid (rosin acid) having a conjugated double bond. Examples of the conjugated resin acid include abietic acid, neoabietic acid, palustric acid, and levopimaric acid. It is preferable that the conjugated resin acid comprises at least one selected from a group consisting of abietic acid and palustric acid, and more preferably comprises abietic acid. Further, examples of the non-conjugated resin acid include dehydroabietic acid, pimaric acid, isopimaric acid, dihydroabietic acid, dihydropimaric acid, secodehydroabietic acid, deisopropyldehydroabietic acid, and demethyldehydroabietic acid.

The conjugated resin acid contained in the chloroprene-based polymer latex composition also includes conjugated resin acids existing in the form of conjugated resin acid salts. In the polymerization of the chloroprene-based polymer, rosin acid (including conjugated resin acid and non-conjugated resin acid), conjugated resin acid, and non-conjugated resin acid can also be added in the form of rosin acid salts, conjugated resin acid salts, and non-conjugated resin acid salts. Further, the emulsion polymerization method using rosin acid or the like is often carried out under strongly alkaline conditions, and in a strongly alkaline chloroprene-based polymer latex, rosin acid, conjugated resin acid, and non-conjugated resin acid often exist in a salt state. Examples of the salt include alkali metal salts, such as potassium salts, sodium salts, and the like. Examples of compounds forming salts with rosin acid, conjugated resin acid, and non-conjugated resin acid include potassium hydroxide, sodium hydroxide, potassium carbonate, sodium carbonate, potassium bicarbonate, sodium bicarbonate, and the like. The examples of conjugated resin acid salts include potassium abietate, potassium neoabietate, potassium palustrate, and potassium levopimarate; and sodium abietate, sodium neoabietate, sodium palustrate, and sodium levopimarate.

The content of the conjugated resin acid can be calculated by freeze-drying the chloroprene-based polymer latex to obtain the solid content of the chloroprene-based polymer, extracting from the solid content with an ethanol and toluene azeotropic mixture (ETA solution) specified in JIS K 6229, subjecting the result to hydrochloric acid treatment to obtain an extract, performing gas chromatography on the extract, analyzing by gas chromatography to obtain measurement results, determining the peak area of the conjugated resin acid component and the peak area of the non-conjugated resin acid component from the measurement results, and calculating the content of the conjugated resin acid component and the non-conjugated resin acid component relative to the total peak area. Specifically, it can be calculated by the method described in the Examples.

The content of the conjugated resin acid in the chloroprene-based polymer latex composition can be controlled by adjusting the type and amount of emulsifier blended into the chloroprene-based polymer latex composition, particularly by adjusting the type and amount of rosin acid used during the emulsion polymerization of the chloroprene-based polymer.

It is known that rosin acid or its alkali metal salt is used as an emulsifier in the emulsion polymerization of a chloroprene-based polymer. However, when using a rosin acid containing a conjugated resin acid having a conjugated double bond as the rosin acid, polymerization was sometimes inhibited. Further, the stability of the resulting chloroprene-based polymer latex was sometimes insufficient, or the adhesive properties were sometimes insufficient. From such viewpoints, disproportionated rosin acid, particularly disproportionated rosin alkali metal salt, is sometimes used as an emulsifier in the emulsion polymerization of a chloroprene-based polymer (particularly, in the emulsion polymerization of a chloroprene-based polymer for adhesive applications).

According to one embodiment of the present invention, an emulsifier containing a conjugated resin acid can be used for the emulsion polymerization of the chloroprene-based polymer, and by using the emulsifier containing the conjugated resin acid, the mechanical stability and viscosity of the resulting chloroprene-based polymer latex composition can be more easily adjusted to appropriate ranges.

The chloroprene-based polymer latex composition according to one embodiment of the present invention can comprise a rosin acid having a conjugated resin acid content rate of 5% by mass or more. The content rate of the conjugated resin acid in the rosin acid is, for example, 5, 10, 15, 20, 25, 30, 35, 40, 45, 50, 55, 60, 65, 70, 75, 80, 90, or 100% by mass, and may be within a range between any two of the numerical values exemplified here.

1.3 Nonionic Surfactant

The chloroprene-based polymer latex composition according to one embodiment of the present invention preferably has a content of a nonionic surfactant of 0.40 parts by mass or less with respect to 100 parts by mass of the chloroprene-based polymer, and more preferably 0.30 parts by mass or less. The content of the nonionic surfactant is, for example, 0, 0.05, 0.10, 0.15, 0.20, 0.25, 0.30, 0.35, or 0.40 parts by mass, and may be within a range between any two of the numerical values exemplified here. The chloroprene-based polymer latex composition according to one embodiment of the present invention may not contain a nonionic surfactant. By containing the nonionic surfactant within the above numerical range, the chloroprene-based polymer latex composition according to the present invention allows for easier adjustment of the mechanical stability and viscosity of the resulting chloroprene-based polymer latex composition to appropriate ranges. The content of the nonionic surfactant with respect to 100 parts by mass of the chloroprene-based polymer can be determined by the method described in the Examples.

Examples of the nonionic surfactant include polyoxyalkylene phenyl ether type, polyoxyalkylene alkyl ether type, polyoxyethylene sorbitan fatty acid ester type, polyoxyethylene sorbitol fatty acid ester type, sorbitan fatty acid ester type, glycerin fatty acid ester type, polyoxyethylene alkylamine type, polyoxyethylene fatty acid ester type, alkyl alkanolamide type surfactants, and the like. It is preferable that the nonionic surfactant comprises at least one selected from the group consisting of polyoxyalkylene phenyl ether type and polyoxyalkylene alkyl ether type surfactants, more preferably comprises at least one selected from the group consisting of polyoxyethylene phenyl ether type and polyoxyethylene alkyl ether type surfactants, and even more preferably comprises a polyoxyethylene styryl phenyl ether type surfactant.

The polyoxyalkylene alkyl ether type and polyoxyalkylene phenyl ether type surfactants can be represented by the general formula $RO(EO)_n (PO)_m H$. In the formula, R is a linear or branched alkyl group having 8 to 30 carbon atoms, or an unsubstituted or substituted phenyl group, preferably a linear or branched alkyl group having 8 to 12 carbon atoms, or an unsubstituted or substituted phenyl group, and more preferably a styrenated phenyl group in which a hydrogen atom of the phenyl group is substituted with a styryl $C_6H_5-CH(CH_3)-$ group. Further, EO represents an ethylene oxide group, PO represents an alkylene oxide group having 3 or more carbon atoms such as a propylene oxide group or a butylene oxide group, and their arrangement may be block or random. Further, n and m are each 0 to 100, and preferably 0 to 50. Note that $n + m > 0$.

Note that the chloroprene-based polymer latex composition according to one embodiment of the present invention may contain emulsifiers or dispersants other than conjugated resin acids, their salts, rosin acids, their salts, and nonionic surfactants. Other emulsifiers and dispersants will be described later in the explanation of the method for producing the chloroprene-based polymer latex.

1.5 Properties of Chloroprene-based Polymer Latex Composition

When the chloroprene-based polymer latex composition according to the present invention is adjusted to a solid content concentration of 55% by mass to obtain a test chloroprene-based polymer latex composition, the agglomerate generation rate of the test chloroprene-based polymer latex composition in a mechanical stability test under conditions of a load of 10 kg and a rotation speed of 1000 rpm is 0.01% to 1.00%.

The agglomerate generation rate in the mechanical stability test under conditions of a load of 10 kg and a rotation speed of 1000 rpm is 0.01% to 1.00%, and preferably 0.01% to 0.70%. The agglomerate generation rate in the mechanical stability test under conditions of a load of 10 kg and a rotation speed of 1000 rpm is, for example, 0.01, 0.02, 0.03, 0.04, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95, or 1.00%, and may be within a range between any two of the numerical values exemplified here.

When the agglomerate generation rate in the mechanical stability test of the chloroprene-based polymer latex composition is equal to or higher than the above lower limit, an adhesive composition comprising the chloroprene-based polymer latex composition appropriately breaks emulsion after application and can exhibit sufficient initial adhesive strength. Further, when the agglomerate generation rate in the mechanical stability test of the chloroprene-based polymer latex composition is equal to or lower than the above upper limit, it is possible to prevent precipitation caused by shear due to spray atomization, which would worsen sprayability, in an adhesive composition comprising the chloroprene-based polymer latex composition.

The agglomerate generation rate in the mechanical stability test of the chloroprene-based polymer latex composition can be measured using the test chloroprene-based polymer latex composition adjusted to a solid content concentration of 55% by mass. The agglomerate generation rate in the mechanical stability test of the chloroprene-based polymer latex composition can be determined by evaluating the amount of agglomerates generated when a shear force of a load of 10 kg and a rotation speed of 1000 rpm is applied to the test chloroprene-based polymer latex composition for 10 minutes using a Maron type tester, and specifically can be measured by the method described in the Examples.

It is considered that the agglomerate generation rate in the mechanical stability test of the chloroprene-based polymer latex composition can be controlled by adjusting the manufacturing conditions of the chloroprene-based polymer latex composition (for example, the types and amounts of raw materials and chemicals such as the types and amounts of emulsifiers and dispersants, and polymerization conditions, and the like) to adjust the particle size and its distribution of the chloroprene-based polymer in the resulting chloroprene-based polymer latex composition and the ease of emulsion breaking.

The chloroprene-based polymer latex composition according to the present invention has a viscosity of the test chloroprene-based polymer latex composition measured with a B-type viscometer at 23°C and 6 rpm of 22 to 100 mPa·s, and more preferably 30 to 80 mPa·s.

The viscosity at 23°C and 6 rpm is, for example, 22, 23, 24, 25, 30, 35, 40, 45, 50, 55, 60, 65, 70, 75, 80, 85, 90, 95, or 100 mPa·s, and may be within a range between any two of the numerical values exemplified here.

When the viscosity is equal to or higher than the above lower limit, dripping of droplets adhering to an adherend after spray application of an adhesive composition comprising the chloroprene-based polymer latex composition can be reduced. Further, it can be avoided that droplets adhering to the adherend penetrate deep into the adherend, resulting in insufficient formation of a surface adhesive layer and insufficient adhesive strength. When the viscosity is equal to or lower than the above upper limit, it can be prevented that low fluidity makes spray application difficult, and it can be suppressed that the application amount is reduced or the application becomes non-uniform, thereby preventing a decrease in adhesive strength as a result.

The viscosity at 23°C and 6 rpm can be measured using the test chloroprene-based polymer latex composition adjusted to a solid content concentration of 55% by mass. The viscosity at 23°C and 6 rpm can be measured using a B-type viscometer, and specifically can be measured by the method described in the Examples.

It is considered that the viscosity at 23°C and 6 rpm can be controlled by adjusting the manufacturing conditions of the chloroprene-based polymer latex composition (for example, the types and amounts of raw materials and chemicals such as the types and amounts of emulsifiers and dispersants, and polymerization conditions, and the like) to adjust the particle size and its distribution of the chloroprene-based polymer in the resulting chloroprene-based polymer latex composition.

By adjusting the agglomerate generation rate and viscosity, the chloroprene-based polymer latex composition according to the present invention makes it possible to prepare an adhesive composition that is excellent in initial adhesive strength and sprayability, that is, causes less clogging, is easy to spray apply, and causes fewer problems such as soaking into or dripping from the adherend.

The chloroprene-based polymer latex composition according to one embodiment of the present invention preferably has an Initial Adhesive Strength 1 of 3.0 N/cm$^2$ or more, and/or an Initial Adhesive Strength 2 of 6.0 N/cm$^2$ or more, measured by the following method for a test adhesive composition comprising 25 parts by mass of an acrylic emulsion (an acrylic latex comprising an acrylic polymer) and 11 parts by mass of a pH adjuster with respect to 100 parts by mass of the chloroprene-based polymer latex composition.

The Initial Adhesive Strength 1 is, for example, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 N/cm$^2$, and may be within a range between any two of the numerical values exemplified here.

The Initial Adhesive Strength 2 is, for example, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, or 8.0 N/cm$^2$, and may be within a range between any two of the numerical values exemplified here.

<Initial Adhesive Strength>

Two pieces of urethane foam (density 30 kg/m$^3$, thickness 20 mm × length 50 mm × width 50 mm) are used as adherends, and the test adhesive composition is spray-applied to each adherend at 70 g/m$^2$ under a 23°C atmosphere. After application, the adhesive surfaces of the urethane foams are overlapped while the test adhesive composition is still wet, and the adherend (laminate) with a thickness of 40 mm is compressed to 20 mm and held for 10 seconds. Thereafter, after being left for 1 minute (Initial Adhesive Strength 1) or 15 minutes (Initial Adhesive Strength 2) in a 23°C atmosphere, a tensile test is immediately performed in a direction perpendicular to the adhesive surface using a tensile tester (Tensilon manufactured by A&D Company, Limited; tensile speed 200 mm/min) to measure the adhesive strength.

The chloroprene-based polymer latex composition according to one embodiment of the present invention preferably has an agglomerate generation rate of 1.00% to 10.00% in a mechanical stability test under conditions of a load of 1.0 kg and a rotation speed of 1000 rpm for a test adhesive composition comprising 25 parts by mass of an acrylic emulsion (an acrylic latex comprising an acrylic polymer) and 11 parts by mass of a pH adjuster with respect to 100 parts by mass of the chloroprene-based polymer latex composition. The agglomerate generation rate in the mechanical stability test under conditions of a load of 1.0 kg and a rotation speed of 1000 rpm for the test adhesive composition is, for example, 1.00, 2.00, 3.00, 4.00, 5.00, 6.00, 7.00, 8.00, 9.00, or 10.00%, and may be within a range between any two of the numerical values exemplified here.

The viscosity at 23°C and 6 rpm, measured with a B-type viscometer, for a test adhesive composition comprising 25 parts by mass of an acrylic emulsion (an acrylic latex comprising an acrylic polymer) and 11 parts by mass of a pH adjuster with respect to 100 parts by mass of the chloroprene-based polymer latex composition according to one embodiment of the present invention is preferably 100 to 5000 mPa·s. The viscosity measured with a B-type viscometer at 23°C and 6 rpm for the test adhesive composition is, for example, 100, 200, 300, 400, 500, 1000, 1500, 2000, 2500, 3000, 3500, 4000, 4500, or 5000 mPa·s, and may be within a range between any two of the numerical values exemplified here.

The measurement method and control method for the agglomerate generation rate and viscosity in the mechanical stability test of the test adhesive composition can conform to the measurement method and control method for the agglomerate generation rate and viscosity in the mechanical stability test of the adhesive composition described later.

2. Method for Producing Chloroprene-based Polymer, Chloroprene-based Polymer Latex, and Chloroprene-based Polymer Latex Composition

The method for producing the chloroprene-based polymer latex according to the present invention is not particularly limited, but it can be produced by the following method. The method for producing the chloroprene-based polymer latex according to one embodiment of the present invention can include an emulsion polymerization step. In the emulsion polymerization step, raw material monomers comprising a chloroprene monomer, or a chloroprene monomer and another monomer copolymerizable therewith, are subjected to emulsion polymerization using an emulsifier, a dispersant, a polymerization initiator, a chain transfer agent, a reducing agent, and the like as appropriate. When a target polymerization rate is reached, a polymerization terminator is added to obtain the chloroprene-based polymer latex. Further, additives such as a nonionic surfactant can be added as necessary to the obtained chloroprene-based polymer latex. Furthermore, unreacted monomers may be removed by a concentration method such as vacuum distillation.

(Emulsifier)

It is preferable that the emulsifier comprises a conjugated resin acid. The amount of conjugated resin acid added can be 0 to 3.5 parts by mass with respect to 100 parts by mass of all monomers used. The amount of conjugated resin acid added with respect to 100 parts by mass of all monomers used is, for example, 0, 0.5, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, or 3.5 parts by mass, and may be within a range between any two of the numerical values exemplified here. The types of conjugated resin acids are as described above, and the conjugated resin acid includes conjugated resin acids existing in the form of conjugated resin acid salts.

The emulsifier can also comprise a non-conjugated resin acid. The amount of non-conjugated resin acid added can be 0.5 to 6.0 parts by mass with respect to 100 parts by mass of all monomers used. The amount of non-conjugated resin acid added with respect to 100 parts by mass of all monomers used is, for example, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, or 6.0 parts by mass, and may be within a range between any two of the numerical values exemplified here.

When the total content of the conjugated resin acid and the non-conjugated resin acid in the emulsifier is taken as 100% by mass, the content rate of the conjugated resin acid can be 5% by mass or more. The content rate of the conjugated resin acid is, for example, 5, 10, 15, 20, 25, 30, 35, 40, 45, 50, 55, 60, 65, 70, 75, 80, 90, or 100% by mass, and may be within a range between any two of the numerical values exemplified here.

Generally, the disproportionated rosin acid used in the emulsion polymerization of a chloroprene-based polymer is obtained by subjecting raw rosin acid to a disproportionation treatment, and the disproportionated rosin acid has an extremely low content of conjugated resin acid or contains no conjugated resin acid. According to one embodiment of the present invention, a rosin acid that has not undergone disproportionation treatment, for example, a raw rosin acid such as tall rosin, gum rosin, or wood rosin, or a rosin acid that has not undergone treatment to completely modify the conjugated resin acid into non-conjugated resin acid (including cases where a part is modified into non-conjugated resin acid and a part remains as conjugated resin acid) can be used as the emulsifier.

The amount of rosin acid added is not particularly limited as long as the content of the conjugated resin acid in the resulting chloroprene-based polymer latex composition falls within the numerical range described above. The amount of rosin acid added can be 3.0 to 7.0 parts by mass with respect to 100 parts by mass of all monomers used. The amount of rosin acid added is, for example, 3.0, 3.5, 4.0, 4.5, 5.0, 5.5, 6.0, 6.5, or 7.0 parts by mass, and may be within a range between any two of the numerical values exemplified here.

The emulsifier can comprise a rosin acid having a conjugated resin acid content rate of 5% by mass or more. The content rate of the conjugated resin acid in the rosin acid is, for example, 5, 10, 15, 20, 25, 30, 35, 40, 45, 50, 55, 60, 65, 70, 75, 80, 90, or 100% by mass, and may be within a range between any two of the numerical values exemplified here.

The emulsifier used in the emulsion polymerization step can also comprise a rosin acid including disproportionated rosin acid and/or its alkali metal salt. When the emulsifier comprises raw rosin acid and/or its salt, and disproportionated rosin acid and/or its salt, it is preferable that the emulsifier comprises 15% by mass or more of the raw rosin acid and/or its salt with respect to 100% by mass of the total of these rosin acids. The emulsifier can comprise, for example, 15, 20, 25, 30, 35, 40, 45, 50, 55, 60, 65, 70, 75, 80, 85, 90, 95, or 100 parts by mass of the raw rosin acid and/or its salt with respect to 100% by mass of the total rosin acid, and may be within a range between any two of the numerical values exemplified here. The emulsifier can also use emulsifiers or dispersants other than rosin acid and/or its alkali metal salt, and as emulsifiers or dispersants other than rosin acid and/or its alkali metal salt, cationic, anionic, or nonionic emulsifiers or dispersants can be used. According to one embodiment of the present invention, the emulsifier used in the emulsion polymerization step can comprise an emulsifier containing a conjugated resin acid and an anionic emulsifier or dispersant. As the anionic emulsifier or dispersant, it is preferable to use sulfate-based or sulfonate-based anionic emulsifiers or dispersants in combination from the viewpoint of stabilizing the chloroprene-based polymer latex when a pH adjuster is added. Specific examples include alkyl sulfonates having 8 to 20 carbon atoms, alkyl aryl sulfates, condensates of sodium naphthalene sulfonate and formaldehyde, and sodium alkyldiphenylether disulfonate. The amount of the anionic emulsifier or dispersant added can be 0.05 to 5 parts by mass with respect to 100 parts by mass of all monomers used. The amount of emulsifier or dispersant other than rosin acid and/or its alkali metal salt added is, for example, 0.05, 0.1, 0.2, 0.3, 0.5, 1.0, 1.5, 2.0, 2.5, 3.0, 3.5, 4.0, 4.5, or 5.0 parts by mass with respect to 100 parts by mass of all monomers used, and may be within a range between any two of the numerical values exemplified here.

(Chain Transfer Agent)

In the emulsion polymerization step, it is preferable to add a chain transfer agent to adjust the molecular weight, molecular weight distribution, and toluene insoluble content of the chloroprene-based polymer. The chain transfer agent may be added at the beginning of polymerization or during polymerization. Preferred chain transfer agents are long-chain alkyl mercaptans such as n-dodecyl mercaptan and t-dodecyl mercaptan, and dialkyl xanthogen disulfides such as diisopropyl xanthogen disulfide and diethyl xanthogen disulfide. Long-chain alkyl mercaptans are more preferred because they make it easier to control the molecular weight and toluene insoluble content. The chain transfer agent can be used alone or in combination of two or more types. The total amount of chain transfer agent added during emulsion polymerization is preferably 0.005 to 0.12 parts by mass with respect to 100 parts by mass of the chloroprene monomer and the monomer copolymerizable with the chloroprene monomer. The total amount of chain transfer agent added is, for example, 0.005, 0.01, 0.05, 0.1, 0.11, or 0.12 parts by mass, and may be within a range between any two of the numerical values exemplified here.

(Initiator)

As the polymerization initiator, ordinary radical polymerization initiators can be used. Specifically, organic or inorganic peroxides such as benzoyl peroxide, potassium persulfate, and ammonium persulfate, and azo compounds such as azobisisobutyronitrile are used. Further, cocatalysts such as anthraquinone sulfonate salts, potassium sulfite, sodium sulfite, and the like may be used in combination as appropriate.

(Potassium Hydroxide and Sodium Hydroxide)

In the emulsion polymerization step, sodium hydroxide and/or potassium hydroxide can be used. Sodium hydroxide and potassium hydroxide can be used in an amount of 0.01 to 2.0 parts by mass with respect to 100 parts by mass of all monomers used.

(Reducing Agent)

In the emulsion polymerization step, a reducing agent can be added. Examples of the reducing agent include potassium pyrosulfite, potassium sulfite, potassium bisulfite, potassium phosphate, potassium hydrogen phosphate, sodium bisulfite, sodium sulfate, thiourea dioxide, and the like. The amount of the reducing agent added can be 0.01 to 3.0 parts by mass with respect to 100 parts by mass of the raw material monomers used in the polymerization step.

(Polymerization conversion rate)

The polymerization conversion rate of the raw material monomers during emulsion polymerization of the chloroprene-based polymer or the like is preferably 50% by mass or more and less than 90% by mass, and more preferably 60 to 85% by mass. By setting the polymerization conversion rate to 50% by mass or more, it is possible to prevent a decrease in the solid content concentration of the chloroprene-based polymer latex, an increase in the load of the drying step after adhesive application, and difficulty in uniformizing the adhesive layer. Further, problems such as odor due to residual chloroprene monomer and deterioration of tackiness and adhesive strength can be prevented. By setting the polymerization conversion rate to less than 90% by mass, an increase in branching in the chloroprene-based polymer and an increase in molecular weight distribution due to an increase in molecular weight can be prevented, and deterioration of initial adhesive strength can be prevented. The polymerization conversion rate (% by mass) is determined by the following formula.

$$[(\text{Total mass of polymer}/\text{Total mass of monomers}) \times 100]$$

Hereinafter, the polymerization conversion rate may also be simply referred to as the polymerization rate.

(Polymerization Temperature)

The chloroprene-based polymer can be polymerized, for example, in the range of 0 to 45°C, and it is particularly preferable to polymerize at a low temperature of 5 to 20°C. By polymerizing at a low temperature of 5 to 20°C, the ratio of trans-1,4 bonds within the polychloroprene molecule is further increased, the crystallization rate can be further enhanced, and more sufficient adhesive strength is achieved when made into an aqueous adhesive.

(Polymerization Terminator)

Generally, in the production of a chloroprene-based polymer, for the purpose of obtaining a polymer with a desired molecular weight and distribution, a polymerization terminator is added when a predetermined polymerization rate is reached to stop the reaction. The polymerization terminator is not particularly limited, but phenothiazine, p-t-butylcatechol, hydroquinone, hydroquinone monomethyl ether, diethylhydroxylamine, and the like can be used.

(Nonionic Surfactant)

The method for producing the chloroprene-based polymer latex according to one embodiment of the present invention can include a step of adding a surfactant after stopping the polymerization. Examples of the surfactant include nonionic surfactants. The types of nonionic surfactants are as described above.
The amount of nonionic surfactant added is preferably 0.4 parts by mass or less with respect to 100 parts by mass of the chloroprene-based polymer. The amount of nonionic surfactant added is, for example, 0, 0.05, 0.10, 0.15, 0.20, 0.25, 0.30, 0.35, or 0.40 parts by mass, and may be within a range between any two of the numerical values exemplified here. The method for producing the chloroprene-based polymer latex according to one embodiment of the present invention may not include the step of adding a surfactant after stopping the polymerization. The surfactant may be added at the beginning of polymerization, such as during charging monomers, may be added before adjusting the solid content concentration, or may be added after adjusting the solid content concentration.

(Solid content concentration)

The method for producing the chloroprene-based polymer latex according to one embodiment of the present invention can include a step of removing unreacted monomers by a concentration method such as vacuum distillation. The solid content concentration of the chloroprene-based polymer latex is not particularly limited, but can be adjusted to 40 to 65% by mass. The solid content concentration of the chloroprene-based polymer latex can be controlled by adjusting the blending ratio including solvents such as water during the emulsion polymerization of the chloroprene-based polymer, or by a concentration step such as vacuum distillation. The chloroprene-based polymer latex obtained by the method described above may be used as is as the chloroprene-based polymer latex composition, or further additives may be added and it may be used as the chloroprene-based polymer latex composition.

3. Adhesive Composition

The adhesive composition according to the present invention can comprise the above-described chloroprene-based polymer latex composition.

3.1 pH Adjuster

The adhesive composition according to one embodiment of the present invention can comprise a pH adjuster. By adding the pH adjuster, initial adhesive strength and storage stability can be further improved. As the pH adjuster, weak acids or buffer solutions can be used. Specifically, at least one compound selected from a group consisting of hydroxy acids such as citric acid and glycolic acid, boric acid, and amino acids is preferred, and among these, amino acids are preferred. Examples of amino acids include glycine, alanine, threonine, and proline, and glycine is more preferred from the viewpoints of cost, adhesive performance, ease of handling, and the like.

It is preferable that the adhesive composition according to one embodiment of the present invention contains 1 to 20 parts by mass of the pH adjuster with respect to 100 parts by mass of the solid content of the chloroprene-based polymer latex. The content of the pH adjuster is, for example, 1, 2, 3, 4, 5, 6, 7, 8, 9, 10, 11, 12, 13, 14, 15, 16, 17, 18, 19, or 20 parts by mass, and may be within a range between any two of the numerical values exemplified here. The pH adjuster may be used alone or in combination of two or more types.

3.2 Polymer Emulsion

The adhesive composition according to one embodiment of the present invention can comprise a polymer emulsion (a latex comprising a polymer other than the chloroprene-based polymer).

Examples of the polymer emulsion include one or more selected from the group consisting of acrylic emulsions, urethane emulsions, styrene and butadiene rubber latexes, acrylonitrile and butadiene rubber latexes, natural rubber latexes, and the like, and it is preferable to comprise an acrylic emulsion. The acrylic emulsion can be obtained by (co) polymerizing a (meth)acrylic acid ester, optionally with a monomer serving as a functional group, a monomer serving as a crosslinking group, and/or another copolymerizable monomer.

In the adhesive composition according to one embodiment of the present invention, the content of the polymer emulsion with respect to 100 parts by mass of the solid content of the chloroprene-based polymer latex is, for example, 0, 5, 10, 15, 20, 25, 30, 35, 40, or 45 parts by mass, and may be within a range between any two of the numerical values exemplified here. The polymer emulsion may be used alone or in combination of two or more types. By comprising the polymer emulsion (particularly an acrylic emulsion which is an acrylic latex comprising an acrylic polymer), the adhesive composition according to one embodiment of the present invention can further improve its storage stability and the feel (hardness) of the adhesive layer while maintaining initial adhesive strength.

The adhesive composition according to one embodiment of the present invention can contain known components, and may, for example, further contain a tackifier, an acid acceptor, an antioxidant, a filler, a pigment, a colorant, a wetting agent, an antifoaming agent, a thickener, and the like. Tackifier examples include phenolic resins, terpene resins, rosin derivative resins, petroleum hydrocarbons, and the like. In the adhesive composition according to one embodiment of the present invention, the amount of thickener with respect to 100 parts by mass of the solid content of the chloroprene-based polymer latex composition can be 5 parts by mass or less, and can be less than 1 part by mass. The amount of thickener with respect to 100 parts by mass of the solid content of the chloroprene-based polymer latex composition can be, for example, 0, 1, 2, 3, 4, or 5 parts by mass, and can be within a range between any two of the numerical values exemplified here. Since the chloroprene-based polymer latex composition according to one embodiment of the present invention has an appropriate viscosity, it can be adjusted to an appropriate viscosity even when the amount of thickener is smaller than in conventional adhesive compositions.

It is preferable that the adhesive composition according to one embodiment of the present invention has an Initial Adhesive Strength 1 measured by the above method of 3.0 N/cm$^2$ or more, and/or an Initial Adhesive Strength 2 of 6.0 N/cm$^2$ or more.

The Initial Adhesive Strength 1 is, for example, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 N/cm$^2$, and may be within a range between any two of the numerical values exemplified here.

The Initial Adhesive Strength 2 is, for example, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, or 8.0 N/cm$^2$, and may be within a range between any two of the numerical values exemplified here.

It is preferable that the adhesive composition according to one embodiment of the present invention has an agglomerate generation rate of 1.00% to 10.00% in a mechanical stability test under conditions of a load of 1.0 kg and a rotation speed of 1000 rpm. The agglomerate generation rate in the mechanical stability test under conditions of a load of 1.0 kg and a rotation speed of 1000 rpm for the test adhesive composition is, for example, 1.00, 2.00, 3.00, 4.00, 5.00, 6.00, 7.00, 8.00, 9.00, or 10.00%, and may be within a range between any two of the numerical values exemplified here.

When the agglomerate generation rate in the mechanical stability test of the adhesive composition is equal to or higher than the above lower limit, the adhesive composition breaks emulsion more appropriately after application and can exhibit more sufficient initial adhesive strength. Further, when the agglomerate generation rate in the mechanical stability test of the adhesive composition is equal to or lower than the above upper limit, it is possible to prevent precipitation caused by shear due to spray atomization, which would worsen sprayability. The agglomerate generation rate in the mechanical stability test of the adhesive composition can be specifically measured by the method described in the Examples.

It is considered that the agglomerate generation rate in the mechanical stability test of the adhesive composition can be controlled by adjusting the manufacturing conditions of the chloroprene-based polymer latex composition to adjust the particle size and its distribution of the chloroprene-based polymer in the resulting chloroprene-based polymer latex composition and the ease of emulsion breaking.

It is preferable that the adhesive composition according to one embodiment of the present invention is such that the viscosity at 23°C and 6 rpm, measured with a B-type viscometer, is 100 to 5000 mPa·s. The viscosity measured with a B-type viscometer at 23°C and 6 rpm for the adhesive composition is, for example, 100, 200, 300, 400, 500, 1000, 1500, 2000, 2500, 3000, 3500, 4000, 4500, or 5000 mPa·s, and may be within a range between any two of the numerical values exemplified here.

When the viscosity is equal to or higher than the above lower limit, dripping of droplets adhering to an adherend after spray application of the adhesive composition can be reduced. Further, it can be avoided that droplets adhering to the adherend penetrate deep into the adherend, resulting in insufficient formation of a surface adhesive layer and insufficient adhesive strength. When the viscosity is equal to or lower than the above upper limit, it can be prevented that low fluidity makes spray application difficult, and it can be suppressed that the application amount is reduced or the application becomes non-uniform, thereby preventing a decrease in adhesive strength as a result. The viscosity of the adhesive composition can be specifically measured by the method described in the Examples.

It is considered that the viscosity can be controlled by adjusting the manufacturing conditions of the chloroprene-based polymer latex composition to adjust the particle size and its distribution of the chloroprene-based polymer in the resulting chloroprene-based polymer latex composition and the ease of emulsion breaking.

The adhesive composition according to one embodiment of the present invention can be suitably used as an adhesive, preferably an aqueous adhesive, more preferably a one-component aqueous adhesive. The adhesive composition according to one embodiment of the present invention can be suitably used as a spray-type adhesive, and particularly suitably used as a spray-type adhesive for bonding the adherends described below.

Examples of the adherend targeted for adhesion by the adhesive composition according to one embodiment of the present invention include foams (cellular materials) made of materials such as polyurethane, ethylene-vinyl acetate copolymer, polyethylene, wood, cloth, woven fabrics, and the like. The adhesive composition according to one embodiment of the present invention can be for polyurethane foam, and at least one of the adherends can be polyurethane foam. For example, it is suitable for bonding polyurethane foams to each other, polyurethane foam to wood, and polyurethane foam to cloth, and can be suitably used, for example, for adhesion in the manufacture of furniture including polyurethane foam members.

EXAMPLES

Hereinafter, the present invention will be described in more detail based on Examples, but the present invention is not to be construed as being limited thereto.

<Preparation of Chloroprene-based Polymer Latex>

Into a polymerization vessel with an internal volume of 10 L, 100 parts by mass of chloroprene (monomer), 0.1 parts by mass of n-dodecyl mercaptan, 90 parts by mass of pure water, 4.5 parts by mass of Potassium Rosinate A (containing conjugated resin acid, prepared in-house), 0.55 parts by mass of potassium hydroxide, 0.30 parts by mass of the sodium salt of a β-naphthalene sulfonic acid formalin condensate (product name "Demol N", manufactured by Kao Corporation), and 0.3 parts by mass of $NaHSO_3$ were added. Potassium persulfate as a polymerization initiator and thiourea dioxide as a reducing agent were added, and polymerization was carried out at a polymerization temperature of 10°C under a nitrogen stream. When the polymerization conversion rate reached 83% by mass, phenothiazine as a polymerization terminator was added to stop the polymerization, thereby obtaining a latex before distillation. 0.20 parts of polyoxyethylene styryl phenyl ether (product name "Noigen EA-137", manufactured by DKS Co. Ltd.) as a nonionic surfactant was added, and this latex before distillation was subjected to vacuum distillation to remove unreacted monomers, thereby obtaining a distilled Latex A (solid content: 55% by mass) containing a chloroprene-based polymer.

Latexes B to R (solid content: 55% by mass) were obtained by performing the same operation as for Latex A, except that the components and conditions shown in Tables 1 to 2 were used. As the disproportionated potassium rosinate, RONDIS K-25 manufactured by Arakawa Chemical Industries, Ltd. was used.

[Evaluation of Chloroprene-based Polymer Latex Composition]

<Content of Conjugated Resin Acid Component and Non-conjugated Resin Acid Component in Rosin Acid Component>

The contents of the conjugated resin acid component and the non-conjugated resin acid component in the aforementioned Potassium Rosinate A and disproportionated potassium rosinate were measured. First, the rosin acid was dissolved in an ethanol and toluene azeotropic mixture (ETA solution) specified in JIS K 6229 and subjected to hydrochloric acid treatment to obtain a solution (rosin acid: 1.5% by mass). Gas chromatography was performed on this solution under the following conditions.

[Gas Chromatography Conditions]

Gas chromatograph mass spectrometer: product name "JEOL Jms-Q1050GC", manufactured by JEOL Ltd.
Column used: FFAP 0.32 mm $\varphi$ (diameter) $\times$ 25 m (film thickness 0.3 $\mu$m)
Column temperature: 200°C (hold for 90 min) $\rightarrow$ 250°C
Temperature ramp rate: 10°C/min
Inlet temperature: 270°C
Injection volume: 1 $\mu$L
Interface temperature: 270°C
Ion source temperature: 270°C
Ionization current: 50 $\mu$A
Ionization voltage: 70 eV
Detector voltage: -1000 V
Ionization method: EI method

From the measurement results of the gas chromatography, the peak areas of the respective conjugated resin acid components of abietic acid component (abietic acid component includes abietic acid and its salts; the same applies to other resin acids), neoabietic acid component, palustric acid component, and levopimaric acid component were determined, and the peak areas of the respective non-conjugated resin acid components of dehydroabietic acid component, pimaric acid component, isopimaric acid component, and dihydroabietic acid component were determined. The area percentage of the peak area of each component relative to the total peak area was regarded as the content of each component, and the contents of the conjugated resin acid component and the non-conjugated resin acid component were measured.

The area percentages of the conjugated resin acid components in Potassium Rosinate A were as follows: abietic acid component was 38.5%, neoabietic acid component was 1.2%, palustric acid component was 2.3%, levopimaric acid component was 2.6%, and the total area of the conjugated resin acid components was 44.6%. The area percentages of the non-conjugated resin acid components were follows: dehydroabietic acid component was 33.5%, pimaric acid component was 8.0%, dihydroabietic acid component 5.2%, and the total area of the non-conjugated resin acid components was 46.7%.

When gas chromatography was performed similarly on the aforementioned disproportionated potassium rosinate, none of the abietic acid component, neoabietic acid component, palustric acid component, and levopimaric acid component were detected. The area percentages of the non-conjugated resin acid components were as follows: dehydroabietic acid component was 68.8%, pimaric acid component was 0.5%, dihydroabietic acid component was 21.1%, and the total area of the non-conjugated resin acid components was 90.4%.

<Content of Conjugated Resin Acid Component in Chloroprene-based Polymer>

3 g of the solid content of the chloroprene-based polymer obtained by freeze-drying the aforementioned chloroprene-based polymer latex was cut into 2 mm squares to obtain test pieces. Those test pieces were placed in an eggplant-shaped flask equipped with a condenser, extracted with an ethanol and toluene azeotropic mixture (ETA solution) specified in JIS K 6229, and subjected to hydrochloric acid treatment. Gas chromatography was performed on the obtained extract under the same conditions as described above for the analysis of the contents of the conjugated resin acid component and non-conjugated resin acid component in the rosin acid component, and the content of the conjugated resin acid component in the chloroprene-based polymer was calculated. The results are shown in Tables 1 to 2.

<Content of Polyoxyethylene Styryl Phenyl Ether with respect to 100 Parts by Mass of Chloroprene-based Polymer>

The $^1$H-NMR spectrum of a sample solution prepared by dissolving 1.0 mg of internal standard substance sodium trimethylsilylpropionate-d4 (TSP-d4) and about 30 mg of polyoxyethylene styryl phenyl ether (product name "Noigen EA-137", manufactured by DKS Co. Ltd.) in 1.0 mL of heavy water was measured using a JNM-ECX-400 (400 MHz, FT type) manufactured by JEOL Ltd. When the chemical shift reference substance was heavy water (4.65 ppm), the peak area $I_{TSP}$ derived from TSP-d4 at -0.50 to 0.50 ppm and the peak area $I_{EA-137}$ derived from polyoxyethylene styryl phenyl ether at 3.00 to 4.00 ppm were obtained.

The unknown $M_{EA-137}/H_{EA-137}$ was calculated from the following relational expression. Here, W represents mass, M represents molecular weight, I represents signal integral value, and H represents signal H count.

$$W_{TSP}/M_{TSP} : W_{EA-137}/M_{EA-137} = I_{TSP}/H_{TSP} : I_{EA-137}/H_{EA-137}$$

The solid content obtained by freeze-drying the above chloroprene-based polymer latex composition was extracted with an ethanol and toluene azeotropic mixture (ETA solution) specified in JIS K 6229, the solid content was removed by filtration to obtain a solution, and then the solvent was removed to obtain a dried solid. At this time, the ratio of the mass of the obtained dried solid substance to the solid content mass of the chloroprene-based polymer latex composition was taken as the ETA extraction rate.

The $^1$H-NMR spectrum of a sample solution prepared by dissolving about 30 mg of the above dried solid and 1.0 mg of TSP-d4 in 1.0 mL of heavy water was measured using a JNM-ECX-400 (400 MHz, FT type) manufactured by JEOL Ltd. When the chemical shift reference substance was heavy water (4.65 ppm), the peak area $I_{TSP}$ derived from TSP at -0.50 to 0.50 ppm and the peak area $I_x$ derived from polyoxyethylene styryl phenyl ether at 3.00 to 4.00 ppm were obtained. The mass $W_x$ of polyoxyethylene styryl phenyl ether contained in the sample solution was calculated from the following relational expression.

$$W_{TSP}/M_{TSP} : W_x/M_{EA-137} = I_{TSP}/H_{TSP} : I_x/H_{EA-137}$$

The ratio C of the mass of polyoxyethylene styryl phenyl ether to the solid content mass of the chloroprene-based polymer latex composition was calculated by the following formula.

$$C (\%) = W_x (mg) / \text{Mass of dried solid (mg)} \times 100 \times \text{ETA extraction rate (\%)}$$

From the obtained value of C, the parts by mass of polyoxyethylene styryl phenyl ether with respect to 100 parts by mass of chloroprene-based polymer was calculated, and the values in Tables 1 to 2 were obtained.

<Nuclear Magnetic Resonance Analysis (1H-NMR) Measurement Conditions>

    Measurement mode: Non-decoupling
    Flip angle: 45 degrees
    Waiting time: 4.3 seconds
    Sample rotation speed: 12 Hz
    Window processing: Exponential function
    Number of scans: 32
    Measurement temperature: 30°C

<Toluene Insoluble Content>

1 g of the chloroprene-based polymer obtained by freeze-drying the aforementioned chloroprene-based polymer latex was cut into 2 mm squares to obtain test pieces. Those test pieces were placed in a conical beaker and dissolved in 80 g of toluene over 16 hours. Subsequently, after centrifugation, the gel fraction (insoluble fraction) was separated using a 200 mesh metal screen. Thereafter, the gel fraction was dried, and the mass of the dried material was measured. The toluene insoluble content in the chloroprene-based polymer was determined by the following formula, where A g is the mass of the freeze-dried latex, and B g is the mass of the gel fraction (insoluble fraction) separated from the mixture dissolved in toluene.

$$\text{Toluene insoluble content (gel fraction)} = B/A \times 100 \ (\%)$$

The results are shown in Table 1.

<Average Particle Size>

The aforementioned chloroprene-based polymer latex was diluted and adjusted with distilled water so that the solid content concentration became 0.01% by mass, and the average particle size was determined using an ELSZ Series (manufactured by Otsuka Electronics Co., Ltd.). Here, as the average particle size of the latex, a value determined by the cumulant method from the autocorrelation function determined by the photon correlation method in the dynamic light scattering method was used. The results are shown in Tables 1 to 2.

<Mechanical stability>

Using a Maron type tester, the amount of agglomerates generated when a shear force of a load of 10 kg and a rotation speed of 1000 rpm was applied for 10 minutes to 50 g of the chloroprene-based polymer latex composition with a solid content concentration of 55% by mass was evaluated. After applying the shear force under the above conditions, the agglomerates adhering to the rotor part of the Maron type tester were collected on a SUS80 mesh metal screen, washed with pure water, subjected to vacuum drying, and then their mass was measured. The agglomerate generation rate was calculated from the measured dried mass of agglomerates using the following formula as an index of mechanical stability. A smaller value of the agglomerate generation rate indicates greater stability against shear force and better mechanical stability.

Agglomerate generation rate (mechanical stability) (%) = Dried mass of agglomerates [g]/Solid content mass of chloroprene-based polymer latex composition [g] $\times$ 100

<Viscosity>

The viscosity at 23°C and 6 rpm of the chloroprene-based polymer latex composition with a solid content concentration of 55% by mass was measured with a B-type viscometer. The viscosity was measured under the following conditions.

Measurement instrument: product name "VISCOMETER TVB-20L", manufactured by Toki Sangyo Co., Ltd.
Spindle and Rotor: 1M (cylindrical shape with a radius of 19 mm $\times$ a thickness of 65 mm)
Rotational speed: 6 rpm

[Evaluation of Adhesive Composition]

(Preparation of Adhesive Composition)

To 182 parts by mass of the chloroprene-based polymer latex obtained above (100 parts by mass of solid content), 25 parts by mass of an acrylic emulsion (product name "Acronal Proof 1299", BASF, solid content 55% by mass) and 11 parts by mass of glycine as a pH adjuster were added and stirred using a Three One Motor to prepare an aqueous adhesive (adhesive composition). In Example 14 and Reference Example 1, the formulation of the adhesive composition was as described in Table 2. As a thickener, sodium polyacrylate (product name "ARON A-20L", manufactured by Toagosei Co., Ltd.) was used. The initial adhesive strength of the obtained aqueous adhesive (adhesive composition) was measured by the following method, and the measurement results are shown in Tables 1 to 2.

<Initial Adhesive Strength>

Two pieces of urethane foam (density 30 kg/m$^3$, thickness 20 mm $\times$ length 50 mm $\times$ width 50 mm) were used as adherends, and the adhesive composition was spray-applied to each adherend at 70 g/m$^2$ under a 23°C atmosphere. After application, the adhesive surfaces of the urethane foams were overlapped while the adhesive composition was still wet, and the adherend (laminate) with a thickness of 40 mm was compressed to 20 mm and held for 10 seconds. Thereafter, after being left for 1 minute (Initial Adhesive Strength 1) or 15 minutes (Initial Adhesive Strength 2) in a 23°C atmosphere, a tensile test was immediately performed in a direction perpendicular to the adhesive surface using a tensile tester (Tensilon manufactured by A&D Company, Limited; tensile speed 200 mm/min) to measure the adhesive strength.

<Sprayability>

The above aqueous adhesive (adhesive composition) was spray-applied to an adherend (urethane foam), and the sprayability (degree of clogging and degree of applicability of the adhesive composition to the adherend) was evaluated based on the following evaluation criteria.

(Degree of clogging)

A: Sprayable well without clogging
B: Slightly prone to clogging but sprayable
C: Not sprayable due to clogging

(Degree of applicability of the adhesive composition to the adherend)

A: No soaking into or dripping from the adherend was observed for the adhesive composition
B: Slight soaking into or dripping from the adherend was observed for the adhesive composition
C: Soaking into or dripping from the adherend was observed for the adhesive composition

- : Not sprayable due to clogging, evaluation of application feel was not possible.

<Mechanical stability>

Using a Maron type tester, the amount of agglomerates generated when a shear force of a load of 1.0 kg and a rotation speed of 1000 rpm was applied for 2 minutes to 50 g of the adhesive composition was evaluated. After applying the shear force under the above conditions, the agglomerates adhering to the rotor part of the Maron type tester were collected on a SUS80 mesh metal screen, washed with pure water, subjected to vacuum drying, and then their mass was measured. The agglomerate generation rate was calculated from the measured dried mass of agglomerates using the following formula as an index of mechanical stability. A smaller value of the agglomerate generation rate indicates greater stability against shear force and better mechanical stability.

Agglomerate generation rate (mechanical stability) (%) = Dried mass of agglomerates [g]/Solid content mass of chloroprene-based polymer latex composition [g] $\times$ 100

<Viscosity>

The viscosity at 23°C and 6 rpm of the adhesive composition was measured with a B-type viscometer. The viscosity was measured under the following conditions. Since the viscosity of the adhesive composition tends to be higher than the viscosity of the chloroprene-based polymer latex composition, a different spindle and/or rotor was used than for the viscosity measurement of the chloroprene-based polymer latex composition.

Measurement instrument: product name "VISCOMETER TVB-20L", manufactured by Toki Sangyo Co., Ltd.)

Spindle and Rotor: 2M (disc shape with a radius of 19 mm x a thickness of 7 mm)

Rotational speed: 6 rpm

[Table 1]

| Table 1 | | | | Example | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| production of chloroprene -based polymer latex | polymerization formulation | chloroprene | parts by mass | 100 | 100 | 100 | 100 | 100 | 100 | 100 | 100 | 100 | 100 | 100 |
| | | n-dodecyl mercaptan | | 0.1 | 0.1 | 0.1 | 0.1 | 0.1 | 0.1 | 0.1 | 0.1 | 0.1 | 0.1 | 0.1 |
| | | pure water | | 90 | 90 | 90 | 90 | 90 | 90 | 90 | 90 | 90 | 90 | 90 |
| | | Potassium Rosinate A | | 4.5 | 5.0 | 5.0 | 5.0 | 2.0 | 5.0 | 2.5 | 2.8 | 2.5 | 1.5 | 5.5 |
| | | disproportionated potassium rosinate | | - | - | - | - | 2.0 | - | 2.5 | 2.5 | 2.8 | 3.5 | 0.5 |
| | | potassium hydroxide | | 0.55 | 0.55 | 0.55 | 0.55 | 0.55 | 0.55 | 0.55 | 0.55 | 0.55 | 0.55 | 0.55 |
| | | sodium salt of $\beta$-naphthalene sulfonic acid formalin condensate | | 0.3 | 0.3 | 0.3 | 0.3 | 0.3 | 0.3 | 0.3 | 0.3 | 0.3 | 0.3 | 0.3 |
| | | $NaHSO_3$ | | 0.3 | 0.3 | 0.3 | 0.3 | 0.3 | 0.3 | 0.3 | 0.3 | 0.3 | 0.3 | 0.3 |
| | | thiourea dioxide | | 0.01 | 0.01 | 0.01 | 0.01 | 0.01 | 0.01 | 0.01 | 0.01 | 0.01 | 0.01 | 0.01 |
| | | polyoxyethylene styryl phenyl ether | | 0.20 | 0.20 | 0.00 | 0.05 | 0.20 | 0.30 | 0.05 | 0.05 | 0.05 | 0.05 | 0.05 |
| | polymerization conditions | polymerization temperature | °C | 10 | 10 | 10 | 10 | 10 | 10 | 10 | 10 | 10 | 10 | 10 |
| | | polymerization conversion rate | % | 83 | 83 | 83 | 83 | 83 | 83 | 83 | 83 | 83 | 83 | 83 |
| | | polymerization time | hour | 13 | 13 | 13 | 13 | 13 | 13 | 13 | 13 | 13 | 13 | 13 |
| | Latex No. | | - | A | B | C | D | E | F | G | H | I | J | K |
| chloroprene -based polymer latex composition | content | chloroprene-based polymer | parts by mass | 100 | 100 | 100 | 100 | 100 | 100 | 100 | 100 | 100 | 100 | 100 |
| | | conjugated resin acid | | 2.5 | 2.8 | 2.8 | 2.8 | 1.1 | 2.8 | 1.4 | 1.6 | 1.4 | 0.8 | 3.1 |
| | | polyoxyethylene styryl phenyl ether | | 0.24 | 0.24 | 0.00 | 0.06 | 0.24 | 0.36 | 0.06 | 0.06 | 0.06 | 0.06 | 0.06 |
| | toluene insoluble content | | % | 5 | 5 | 2 | 1 | 6 | 6 | 5 | 2 | 1 | 5 | 5 |
| | average particle size | | nm | 129 | 112 | 132 | 134 | 139 | 134 | 131 | 128 | 125 | 135 | 130 |
| | mechanical stability | | % | 0.18 | 0.21 | 0.37 | 0.10 | 0.41 | 0.09 | 0.38 | 0.22 | 0.09 | 0.72 | 0.11 |
| | viscosity (23°C) | | mPa·s | 26 | 29 | 26 | 23 | 29 | 25 | 60 | 32 | 41 | 27 | 29 |

(continued)

| Table 1 | | | | Example | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| adhesive composition | formulation | latex composition | parts by mass | 100 | 100 | 100 | 100 | 100 | 100 | 100 | 100 | 100 | 100 | 100 |
| | | acrylic emulsion | | 25 | 25 | 25 | 25 | 25 | 25 | 25 | 25 | 25 | 25 | 25 |
| | | glycine | | 11 | 11 | 11 | 11 | 11 | 11 | 11 | 11 | 11 | 11 | 11 |
| | | sodium polyacrylate (thickener) | | 0 | 0 | 0 | 0 | 0 | 0 | 0 | 0 | 0 | 0 | 0 |
| | adhesion test results | Initial Adhesive Strength 1 (after 1 minuite) | $N/cm^2$ | 3.5 | 3.6 | 3.5 | 3.9 | 3.1 | 3.0 | 4.1 | 4.0 | 4.0 | 3.0 | 3.1 |
| | | Initial Adhesive Strength 2 (after 15 minuites) | N/cm2 | 6.8 | 6.9 | 7.1 | 7.3 | 6.3 | 6.2 | 7.5 | 7.6 | 7.5 | 6.0 | 6.1 |
| | sprayability | degree of clogging | | A | A | A | A | A | A | A | A | A | B | A |
| | | degree of applicability of adhesive composition to adherend | | B | B | B | B | B | B | A | A | A | B | B |
| | | mechanical stability | % | 3.5 | 3.0 | 3.3 | 2.9 | 3.3 | 3.4 | 1.8 | 2.7 | 4.0 | 7.5 | 4.5 |
| | | viscosity (23°C) | mPa·s | 123 | 133 | 132 | 125 | 127 | 110 | 159 | 201 | 157 | 134 | 128 |

[Table 2]

| Table 2 | | | | Example | | | Comparative Example | | | | | Reference Example |
|---|---|---|---|---|---|---|---|---|---|---|---|---|
| | | | | 12 | 13 | 14 | 1 | 2 | 4 | 5 | 6 | 1 |
| production of chloroprene-based polymer latex | polymerization formulation | chloroprene | parts by mass | 100 | 100 | 100 | 100 | 100 | 100 | 100 | 100 | 100 |
| | | n-dodecyl mercaptan | | 0.1 | 0.1 | 0.1 | 0.1 | 0.1 | 0.1 | 0.1 | 0.1 | 0.1 |
| | | pure water | | 90 | 90 | 90 | 90 | 90 | 90 | 90 | 90 | 90 |
| | | Potassium Rosinate A | | 3.5 | - | 2.5 | - | 6.5 | 2.0 | 1.5 | 1.0 | 2.5 |
| | | disproportionated potassium rosinate | | 1.5 | 4.5 | 2.5 | 4.5 | - | 2.0 | 1.5 | 6.0 | 2.5 |
| | | potassium hydroxide | | 0.55 | 0.55 | 0.55 | 0.55 | 0.55 | 0.55 | 0.55 | 0.55 | 0.55 |
| | | sodium salt of $\beta$-naphthalene sulfonic acid formalin condensate | | 0.3 | 0.3 | 0.3 | 0.3 | 0.3 | 0.3 | 0.3 | 0.3 | 0.3 |
| | | $NaHSO_3$ | | 0.3 | 0.3 | 0.3 | 0.3 | 0.3 | 0.3 | 0.3 | 0.3 | 0.3 |
| | | thiourea dioxide | | 0.01 | 0.01 | 0.01 | 0.01 | 0.01 | 0.01 | 0.01 | 0.01 | 0.01 |
| | | polyoxyethylene styryl phenyl ether | | 0.05 | 0.20 | 0.05 | 0.20 | 0.20 | 0.04 | 0.05 | 0.05 | 0.05 |
| | polymerization conditions | polymerization temperature | °C | 10 | 10 | 10 | 10 | 10 | 10 | 10 | 10 | 10 |
| | | polymerization conversion rate | % | 87 | 83 | 83 | 83 | 83 | 65 | 83 | 83 | 83 |
| | | polymerization time | h | 14 | 4 | 13 | 13 | 13 | 10 | 13 | 13 | 13 |
| | Latex No. | | - | L | M | G | N | O | Q | P | R | G |
| chloroprene-based polymer latex composition | content | chloroprene-based polymer | parts by mass | 100 | 100 | 100 | 100 | 100 | 100 | 100 | 100 | 100 |
| | | conjugated resin acid | | 2.0 | 0.0 | 1.4 | 0.0 | 3.6 | 1.1 | 0.8 | 0.6 | 1.4 |
| | | polyoxyethylene styryl phenyl ether | | 0.06 | 0.24 | 0.06 | 0.24 | 0.24 | 0.06 | 0.06 | 0.06 | 0.06 |
| | toluene insoluble content | | % | 27 | 2 | 5 | 4 | 3 | 1 | 5 | 5 | 5 |
| | average particle size | | nm | 125 | 122 | 131 | 164 | 130 | 100 | 130 | 160 | 131 |
| | mechanical stability | | % | 0.79 | 0.27 | 0.38 | 0.73 | 0.81 | 1.51 | 1.27 | 0.71 | 0.38 |
| | viscosity (23°C) | | mPa·s | 35 | 87 | 60 | 21 | 20 | 109 | 20 | 15 | 60 |

(continued)

| Table 2 | | | | | Example | | | Comparative Example | | | | | Reference Example |
|---|---|---|---|---|---|---|---|---|---|---|---|---|---|
| | | | | | 12 | 13 | 14 | 1 | 2 | 4 | 5 | 6 | 1 |
| adhesive composition | formulation | latex composition | parts by mass | | 100 | 100 | 100 | 100 | 100 | 100 | 100 | 100 | 100 |
| | | acrylic emulsion | | | 25 | 25 | 25 | 25 | 25 | 25 | 25 | 25 | 25 |
| | | glycine | | | 11 | 11 | 11 | 11 | 11 | 11 | 11 | 11 | 11 |
| | | sodium polyacrylate (thickener) | | | 0 | 0 | 0.5 | 0 | 0 | 0 | 0 | 0 | 1 |
| | adhesion test results | Initial Adhesive Strength 1 (after 1 minuite) | $N/cm^2$ | | 3.1 | 3.4 | 3.4 | 2.6 | 2.4 | - | 2.6 | 2.6 | - |
| | | Initial Adhesive Strength 2 (after 15 minuites) | $N/cm^2$ | | 6,1 | 7.2 | 7.0 | 5.7 | 5.8 | - | 5.7 | 5.7 | - |
| | sprayability | degree of clogging | | | B | A | B | A | A | C | B | B | C |
| | | degree of applicability of adhesive composition to adherend | | | A | B | A | C | C | - | B | C | - |
| | | mechanical stability | % | | 8.7 | 5.6 | 6.9 | 1.3 | 1.6 | 14.7 | 11.4 | 8.7 | 15.0 |
| | | viscosity (23°C) | mPa·s | | 151 | 250 | 3410 | 86 | 93 | 113 | 135 | 90 | 5100 |

**Claims**

1. A chloroprene-based polymer latex composition comprising a chloroprene-based polymer, wherein:
   when the chloroprene-based polymer latex composition is adjusted to a solid content concentration of 55% by mass to obtain a test chloroprene-based polymer latex composition,

   an agglomerate generation rate of the test chloroprene-based polymer latex composition in a mechanical stability test under conditions of a load of 10 kg and a rotation speed of 1000 rpm is 0.01% to 1.00%, and
   a viscosity of the test chloroprene-based polymer latex composition measured with a B-type viscometer at 23°C and 6 rpm is 22 to 100 mPa·s.

2. The chloroprene-based polymer latex composition of Claim 1, wherein the chloroprene-based polymer latex composition comprises 0.5 to 3.5 parts by mass of a conjugated resin acid with respect to 100 parts by mass of the chloroprene-based polymer.

3. The chloroprene-based polymer latex composition of Claim 1 or Claim 2, wherein the chloroprene-based polymer has a toluene insoluble content of 30% by mass or less.

4. The chloroprene-based polymer latex composition of Claim 1 or Claim 2, wherein a content of a nonionic surfactant is 0.40 parts by mass or less with respect to 100 parts by mass of the chloroprene-based polymer.

5. The chloroprene-based polymer latex composition of Claim 1 or Claim 2, wherein:
   when the chloroprene-based polymer latex composition, an acrylic latex comprising an acrylic polymer, and a pH adjuster are mixed to prepare a test adhesive composition comprising 25 parts by mass of the acrylic polymer and 11 parts by mass of the pH adjuster with respect to 100 parts by mass of the chloroprene-based polymer,

   an agglomerate generation rate of the test adhesive composition in a mechanical stability test under conditions of a load of 1.0 kg and a rotation speed of 1000 rpm is 1.0% to 10.0%, and
   a viscosity of the test adhesive composition measured with a B-type viscometer at 23°C and 6 rpm is 100 to 5000 mPa·s.

6. An adhesive composition comprising the chloroprene-based polymer latex composition of Claim 1 or Claim 2.

7. The adhesive composition of Claim 6, wherein:

   an agglomerate generation rate in a mechanical stability test under conditions of a load of 1.0 kg and a rotation speed of 1000 rpm is 1.0% to 10.0%; and
   a viscosity measured with a B-type viscometer at 23°C and 6 rpm is 100 to 5000 mPa·s.

8. The adhesive composition of Claim 6, wherein the adhesive composition is for a polyurethane foam.

# EP 4 613 805 A1

## INTERNATIONAL SEARCH REPORT

| | International application No. |
|---|---|
| | **PCT/JP2023/042360** |

### A. CLASSIFICATION OF SUBJECT MATTER

*C08L 11/02*(2006.01)i; *C08F 36/18*(2006.01)i; *C08L 93/04*(2006.01)i; *C09J 111/02*(2006.01)i
FI:  C08L11/02; C08L93/04; C08F36/18; C09J111/02

According to International Patent Classification (IPC) or to both national classification and IPC

### B. FIELDS SEARCHED

Minimum documentation searched (classification system followed by classification symbols)

C08L1/00-101/14; C08F36/00-36/22; C08K3/00-13/08; C09J1/00-201/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/008509 A1 (DENKA CO., LTD.) 11 January 2018 (2018-01-11) claims, examples 1-3, 5-23 | 1-8 |
| X | WO 2016/133190 A1 (DENKA CO., LTD.) 25 August 2016 (2016-08-25) claims, examples 1-3, 5-17 | 1-8 |
| X | WO 2016/133191 A1 (DENKA CO., LTD.) 25 August 2016 (2016-08-25) claims, examples 1-3, 5-8, 10, 12, 13, 15-21, comparative examples 1-4 | 1-8 |
| X | JP 2006-045476 A (DENKI KAGAKU KOGYO K.K.) 16 February 2006 (2006-02-16) claims, paragraph [0001], example 1, comparative example 1 | 1-8 |
| X | JP 2004-059895 A (DENKI KAGAKU KOGYO K.K.) 26 February 2004 (2004-02-26) claims, examples 1-3 | 1-8 |
| A | WO 2013/141170 A1 (SHOWA DENKO K.K.) 26 September 2013 (2013-09-26) claims, examples 1, 2 | 1-8 |
| A | JP 10-053749 A (AICA KOGYO CO., LTD.) 24 February 1998 (1998-02-24) claims, examples 1, 2 | 1-8 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 December 2023** | **09 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/042360**

| Patent document cited in search report | | | Publication date (day/month/year) | Patent family member(s) | | | Publication date (day/month/year) |
|---|---|---|---|---|---|---|---|
| WO | 2018/008509 | A1 | 11 January 2018 | US | 2019/0309195 | A1 | |
| | | | | claims, examples 1-3, 5-23 | | | |
| | | | | EP | 3483211 | A1 | |
| | | | | CN | 109476877 | A | |
| WO | 2016/133190 | A1 | 25 August 2016 | EP | 3260488 | A1 | |
| | | | | claims, examples 1-3, 5-17 | | | |
| WO | 2016/133191 | A1 | 25 August 2016 | TW | 201638269 | A | |
| | | | | claims 1-6, examples 1-3, 5-8, 10, 12-13, 15-21, comparative examples 1-4 | | | |
| JP | 2006-045476 | A | 16 February 2006 | (Family: none) | | | |
| JP | 2004-059895 | A | 26 February 2004 | (Family: none) | | | |
| WO | 2013/141170 | A1 | 26 September 2013 | US | 2015/0057399 | A1 | |
| | | | | claims, examples 1, 2 | | | |
| JP | 10-053749 | A | 24 February 1998 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016160295 A